# EUROPÄISCHE PATENTANMELDUNG

(11) **EP 3 425 461 A1**
(43) Veröffentlichungstag der Anmeldung: **09.01.2019**
(21) Anmeldenummer: 17180289.5
(22) Anmeldetag: 07.07.2017
(51) Int. Cl.: G05B 19/4099, B29C 67/00, B33Y 50/02

(54) **VERFAHREN ZUM ERSTELLEN VON ANWEISUNGEN ZUM ADDITIVEN HERSTELLEN EINES WERKSTÜCKS, COMPUTERPROGRAMMPRODUKT ZUR DURCHFÜHRUNG DIESES VERFAHRENS UND VERFAHREN ZUM ADDITIVEN HERSTELLEN EINES WERKSTÜCKS**

(71) Anmelder: Siemens Aktiengesellschaft, 80333 München (DE)
(72) Erfinder: Aydin, Ömer, 10969 Berlin (DE); Pilz, Heinz, 14513 Teltow (DE)

(57) **Zusammenfassung**

Die Erfindung betrifft ein Verfahren zum Erstellen von Anweisungen zum additiven Herstellen eines Werkstücks 19. Dieses wird beispielsweise durch Laserschmelzen auf einer Bauplattform 20 hergestellt. Hierbei hat das Werkstück 19 eine bestimmte Positionierung, wobei abhängig von der Positionierung bei der lagenweise Herstellung des Werkstücks 19 Überhänge entstehen, bei deren Herstellung Qualitätsprobleme, wie z.B. das Winkel-Kante-Problem, auftreten können. Erfindungsgemäß ist vorgesehen, die identifizierten kritischen Überhangsbereiche mit zusätzlichem Baumaterial 31 zu versehen, welches nach Herstellung des Werkstücks 19 wieder abgetragen werden muss. Qualitätsprobleme lassen sich hierdurch vermeiden, weil diese in dem zusätzlichen Material liegen und das Werkstück nach einer abtragenden Nachbehandlung auch in den kritischen Flächenbereichen die erforderliche Qualität aufweist. Die Erfindung betrifft auch Computerprogrammprodukte zur Ausführung des genannten Verfahrens beziehungsweise deren Verkörperung auf einer Bereitstellungsvorrichtung.

## Beschreibung

Die Erfindung betrifft ein Verfahren zum Erstellen von Anweisungen zum additiven Herstellen eines Werkstücks aus einem Baumaterial, bei dem für das Werkstück eine Bauplandatei erstellt und eine Positionierung, in der das Werkstück in einer Prozesskammer einer Anlage hergestellt werden soll, bestimmt wird. Weiterhin betrifft die Erfindung ein Verfahren zum additiven Herstellen eines Werkstücks. In diesem Verfahren werden üblicherweise Anweisungen nach dem zuerst genannten Verfahren erstellt. Außerdem betrifft die Erfindung ein Computerprogrammprodukt mit Programmbefehlen zur Durchführung der oben genannten Verfahren sowie eine Bereitstellungsvorrichtung für ein solches Computerprogrammprodukt.

Es ist bekannt, dass für additiv herzustellende Bauteile im Rahmen der Fertigungsvorbereitung eine bestimmte Position in der Prozesskammer der Fertigungsanlage gewählt werden muss. Bei der Wahl der herzustellenden Positionierung des Werkstücks ist zu beachten, dass sich möglichst wenige Überhänge ergeben. Überhänge entstehen dort, wo die Oberfläche des herzustellenden Werkstücks einen Überhangwinkel zur Aufbaurichtung des Werkstücks bildet. Die Aufbaurichtung des Werkstücks ist durch die Folge der herzustellenden einzelnen Lagen des Bauteils definiert, wobei die Aufbaurichtung senkrecht auf den herzustellenden Lagen steht. Eine senkrechte Bauteiloberfläche ergibt somit einen Übergangswinkel von 0°, während die Ausbildung von Überhängen zu positiven Überhangwinkeln führt. Überhänge entstehen, wenn Baumaterial zur Ausbildung des Werkstücks in der aktuell herzustellenden Lage verfestigt werden muss, unter dem kein Werkstückmaterial vorher hergestellter Lagen des Werkstücks liegt. Dies kann z.B. bei schrägen oder bogenförmigen Werkstückoberflächen der Fall sein. Abhängig von der Geometrie des herzustellenden Werkstücks ist es nicht immer möglich, die Positionierung desselben so zu wählen, dass das Werkstück ganz ohne Überhänge hergestellt werden kann.

Bei der Herstellung von Werkstückbereichen mit Überhängen kann das so genannte Winkel-Kante-Problem auftreten. Da das Werkstück aufgrund des Überhangs unterhalb der Kante der gerade herzustellenden Lage nicht von dem Werkstück selbst unterstützt wird, kann es hier bei der Herstellung zu einer verringerten Bauteilqualität kommen. Die Qualitätsbeeinträchtigungen können sich durch Maßabweichungen sowie eine verringerte Oberflächenqualität des hergestellten Werkstücks ergeben.

Um Qualitätsbeeinträchtigungen entgegenzuwirken, ist es bekannt, das Werkstück mit Stützstrukturen herzustellen, die sich auf einer Bauplattform abstützen, auf der auch das Werkstück hergestellt wird. Fertigungstechnisch gesehen, sind die Stützstrukturen Teil des herzustellenden Werkstücks und werden nach dessen Herstellung wieder entfernt. Stützstrukturen sind insbesondere dazu geeignet, einem Bauteilverzug entgegenzuwirken. Um einen Überhang abzustützen, sind Stützstrukturen jedoch nur bedingt geeignet. Sie können zwar einem Bauteilverzug entgegenwirken, tragen aber nicht zur Verhinderung einer qualitativ minderwertigen Oberfläche des Werkstücks im Bereich der Überhänge bei.

Als additive Fertigungsverfahren im Sinne dieser Anmeldung sollen Verfahren verstanden werden, bei denen das Material, aus dem ein Bauteil hergestellt werden soll, dem Bauteil während der Entstehung hinzugefügt wird. Dabei entsteht das Bauteil bereits in seiner endgültigen Gestalt oder zumindest annähernd in dieser Gestalt. Das Baumaterial kann beispielsweise pulverförmig oder flüssig sein, wobei durch das additive Fertigungsverfahren das Material zur Herstellung des Bauteils chemisch oder physikalisch verfestigt wird.

Um das Bauteil herstellen zu können, werden das Bauteil beschreibende Daten (CAD-Modell) für das gewählte additive Fertigungsverfahren aufbereitet. Die Daten werden zur Erstellung von Anweisungen für die Fertigungsanlage in an das Fertigungsverfahren angepasste Daten des Bauteils umgewandelt, damit in der Fertigungsanlage die geeigneten Prozessschritte zur sukzessiven Herstellung des Bauteils ablaufen können. Die Daten werden dafür so aufbereitet, dass die geometrischen Daten für die jeweils herzustellenden Lagen (Slices) des Bauteils zur Verfügung stehen, was auch als Slicen bezeichnet wird.

Als Beispiele für das additive Fertigen können das selektive Lasersintern (auch SLS für Selective Laser Sintering), das Selektive Laserschmelzen (auch SLM für Slective Laser Melting) und das Elektronenstrahlschmelzen (auch EBM für Electron Beam Melting) genannt werden. Diese Verfahren eignen sich insbesondere zur Verarbeitung von metallischen Werkstoffen in Form von Pulvern, mit denen Konstruktionsbauteile hergestellt werden können.

Beim SLM, SLS und EBM werden die Bauteile lagenweise in einem Pulverbett hergestellt. Diese Verfahren werden daher auch als pulverbettbasierte additive Fertigungsverfahren bezeichnet. Es wird jeweils eine Lage des Pulvers in dem Pulverbett erzeugt, die durch die Energiequelle (Laser oder Elektronenstrahl) anschließend in denjenigen Bereichen lokal aufgeschmolzen oder gesintert wird, in denen das Bauteil entstehen soll. So wird das Bauteil sukzessive lagenweise erzeugt und kann nach Fertigstellung dem Pulverbett entnommen werden.

Beim SLS besteht die Besonderheit, dass die Pulverteilchen bei diesen Verfahren nicht vollständig aufgeschmolzen werden. Beim SLS wird bei Wahl der Sintertemperatur darauf geachtet, dass diese unterhalb der Schmelztemperatur der Pulverpartikel liegt. Demgegenüber liegt beim SLM und EBM der Energieeintrag betragsmäßig bewusst so hoch, dass die Pulverpartikel vollständig aufgeschmolzen werden.

Ausgangspunkt für die Durchführung eines additiven Fertigungsverfahrens ist eine Beschreibung des Werkstücks in einem Geometriedatensatz, beispielsweise als STL-File (STL steht für Standard Tessellation Language). Das STL-File enthält die dreidimensionalen Daten für eine Aufbereitung zwecks Herstellung durch das additive Fertigungsverfahren. Aus dem STL-File wird ein Fertigungsdatensatz, beispielsweise ein CLI-File (CLI steht für Common Layer Interface) erzeugt, welcher eine zum additiven Herstellen geeignete Aufbereitung der Geometrie des Werkstücks in Lagen oder Scheiben (sog. Slices) enthält. Die Transformation der Daten wird als Slicen bezeichnet. Außerdem benötigt die Maschine weitere Vorgaben zum Herstellen, z.B. die Höhe der herzustellenden Lagen, die Ausrichtung der Schreibvektoren, also Richtung und Länge des Weges, welchen der Energiestrahl auf der Oberfläche des Pulverbettes beschreibt, und die Aufteilung der zu erzeugenden Werkstücklage in Sektoren, in denen bestimmte Verfahrensparameter gelten. Desweiteren sind Fokusdurchmesser und Leistung des verwendeten Energiestrahls festzulegen. Das CLI-File und die Herstellungsdaten bestimmen zusammen einen Ablaufplan, nach dem das im STL-File beschriebene Werkstück in der Fertigungsanlage Lage für Lage additiv hergestellt werden kann.

Sofern es in der nachfolgenden Beschreibung nicht anders angegeben ist, beziehen sich die Begriffe "durchführen" "erstellen", "berechnen", "rechnen", "feststellen", "generieren", "konfigurieren", "modifizieren" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere ist der Ausdruck "Computer" breit auszulegen, um alle elektronischen Geräte mit Datenverarbeitungseigenschaften abzudecken. Computer können somit beispielsweise Personal Computer, Server, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein, die vorzugsweise auch zu einem Netzwerk zusammengeschlossen sein können.

Unter "rechnergestützt" kann im Zusammenhang mit der Erfindung beispielsweise eine Implementierung des Verfahrens verstanden werden, bei dem ein Computer oder mehrere Computer mindestens einen Verfahrensschritt des Verfahrens ausführt oder ausführen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) handeln. Auch kann unter einem Prozessor ein virtualisierter Prozessor oder eine Soft-CPU verstanden werden. Es kann sich beispielsweise auch um einen programmierbaren Prozessor handeln, der mit einer Konfiguration zur Ausführung des genannten erfindungsgemäßen Verfahrens ausgerüstet ist.

Ausgehend von dem eingangs genannten Problem, dass bei der Herstellung von Überhängen das Winkel-Kante-Problem auftreten kann, ergibt sich die Aufgabe, ein Verfahren zum Erstellen von Anweisungen zum additiven Herstellen eines Werkstücks beziehungsweise ein Verfahren zum Herstellen des additiven Werkstücks anzugeben, mit dem sich die Auswirkungen von Qualitätsproblemen des Werkstücks im Bereich von Überhängen minimieren lässt. Außerdem ist es Aufgabe der Erfindung, ein Computerprogrammprodukt beziehungsweise eine Bereitstellungsvorrichtung für dieses Computerprogrammprodukt anzugeben, wobei das Computerprogrammprodukt das genannte Verfahren unterstützt.

Diese Aufgabe wird mit dem eingangs angegebenen Verfahren zum Erstellen von Anweisungen zum additiven Herstellen eines Werkstücks erfindungsgemäß dadurch gelöst, dass ein Computer nach der Bestimmung der Positionierung des Werkstücks in der Prozesskammer folgende Schritte ausführt: Der Computer identifiziert unter Berücksichtigung einer Aufbaurichtung des Werkstücks anhand der Bauplandatei Flächenanteile der Werkstückoberfläche, in denen die Werkstückoberfläche einen Überhang bildet. Dann bestimmt der Computer für diese Flächenanteile lokale Überhangwinkel αᵢ zwischen der Aufbaurichtung und der lokalen Werkstückoberfläche. Dann werden die lokalen Überhangwinkel αᵢ vom Computer mit einem vorgebbaren Referenzwert αᵣ verglichen. Der Referenzwert kann in Abhängigkeit des angewendeten additiven Fertigungsverfahrens, des verwendeten Baumaterials (z. B. Benetzungseigenschaften), der Bauteilgeometrie (z. B. Auftreten innerer Spannungen, Tragfähigkeit der jeweils zuletzt fertiggestellten Lage) und der an das Werkstück gestellten Anforderungen (z. b. Oberflächenqualität) bestimmt werden und gibt an, ab welchen Überhangwinkeln die qualitativen Einschränkungen, beispielsweise aufgrund des Winkel-Kante-Problems, für den intendierten Anwendungsfall des Werkstücks ein kritisches Maß überschreiten. Vorteilhaft wird der Referenzwert αᵣ in einem Bereich von mindestens 25° bis höchstens 50° (also 25° ≤ αᵣ ≤ 50°) festgelegt.

Anschließend identifiziert der Computer diejenigen Flächenanteile, für die αᵢ > αᵣ ist. Diese Flächenanteile sind als kritisch für die Werkstückqualität einzustufen. Deswegen erstellt der Computer aus der Bauplandatei eine modifizierte Bauplandatei des Werkstücks, in der die Geometrie des Werkstücks modifiziert wird. Diese Modifikation wird derart vorgenommen, dass die identifizierten Flächenanteile mit einem Auftrag von zusätzlichem Baumaterial versehen werden. Dies bedeutet, dass im Bereich der identifizierten Flächenanteile eine neue Werkstückoberfläche entsteht, die nicht mit derjenigen übereinstimmt, welche der in der ursprünglichen Bauplandatei definierten Oberfläche entsprechen würde.

Der Auftrag von zusätzlichem Baumaterial kann somit vorteilhaft flächig im gesamten identifizierten Flächenanteil vorgenommen werden. Dadurch, dass die modifizierte Bauplandatei diese Geometrie vorsieht, wird der zusätzliche Materialauftrag automatisch während der additiven Herstellung des Werkstücks hergestellt. Dies geschieht gemäß einer alternativen Lösung der Aufgabe mit dem Verfahren zum additiven Herstellen des Werkstücks, wobei ein Computer nach dem vorstehend genannten Verfahren aus einer Bauplandatei eine modifizierte Bauplandatei generiert. Der Computer generiert dann auf Grundlage der modifizierten Bauplandatei Befehle für eine Anlage zum additiven Fertigen, die durch eine Steuerung dieser Anlage verarbeitet werden können. In einer Prozesskammer der Anlage zum additiven Fertigen wird dann das Werkstück durch Abarbeiten dieser Befehle erzeugt und weist dann die in der modifizierten Bauplandatei definierte Geometrie auf.

Um das Werkstück in der eigentlich gewünschten Geometrie herzustellen, ist es notwendig, das Werkstück einer Nachbearbeitung zu unterziehen. Hierin liegt der Vorteil bei dem erfindungsgemäßen Verfahren, da hier durch einen Materialabtrag das Werkstück auch im Bereich der identifizierten Flächenanteile, also im Bereich von kritischen Überhängen, nach der Nachbearbeitung in der geforderten Qualität vorliegt. Insbesondere Qualitätsmängeln an der Oberfläche des hergestellten Werkstücks lässt sich hierbei mit vergleichsweise geringem Aufwand an Material (zum Beispiel Pulver) und Fertigungsaufwand (durch Verfestigen des zusätzlichen Bauteilmaterials) vorbeugen, wobei auf voluminöse Stützstrukturen verzichtet werden kann. Weiterhin lässt sich auch ein eventueller Bauteilverzug und andere Formabweichungen aufgrund von Qualitätsmängeln des hergestellten Werkstücks korrigieren, da der zusätzliche Auftrag von Baumaterial auf die identifizierten Flächenanteile des Werkstücks ein Bauteilvolumen zur Korrektur zur Verfügung stellt.

Gemäß einer zweckmäßigen Ausgestaltung der Erfindung kann in der modifizierten Bauplandatei ein Auftrag von zusätzlichem Baumaterial auf die identifizierten Flächenanteile jeweils in gleichmäßiger Dicke berücksichtigt werden. Diese Dicke muss ausreichen, um die Qualitätsmängel der Oberfläche so weit von der geplanten Oberfläche des Bauteils gemäß der ursprünglichen Bauplandatei wegzuhalten, dass bei einer Nachbearbeitung durch Abtragen von Material vorzugsweise mit einem subtraktiven Fertigungsverfahren eine neue Oberfläche ohne die ursprünglichen Qualitätsmängel erzeugt werden kann.

Die zu modifizierende Bauplandatei kann der bereits erwähnte, die Geometrie des Werkstücks beschreibende Geometriedatensatz (beispielsweise STL-File) oder der nach dem Slicen erhaltene Fertigungsdatensatz (beispielsweise CLI-File) sein. Mit beiden Datensätzen ist es möglich, bei der Beschreibung des herzustellenden Werkstücks einen zusätzlichen Materialauftrag auf die Oberfläche zu berücksichtigen. Während bei einem Geometriedatensatz der Materialauftrag in einem modifizierten Volumenmodell des herzustellenden Werkstücks berücksichtigt wird, kann bei einem Fertigungsdatensatz der zusätzliche Materialauftrag lagenweise definiert werden. Wird ein modifizierter Geometriedatensatz in einen modifizierten Fertigungsdatensatz umgewandelt, führt das modifizierte Volumenmodell selbstverständlich auch dazu, dass der zusätzliche Materialauftrag während der Herstellung des Werkstücks lagenweise erfolgt.

Gemäß einer vorteilhaften Ausgestaltung der Erfindung ist vorgesehen, dass der Computer die Bauplandatei des Werkstücks zusätzlich dahingehend modifiziert, dass die identifizierten, mit zusätzlichem Baumaterial versehenen Flächenanteile mit mindestens einer Stützstruktur versehen werden. Die Stützstruktur stützt sich dann in an sich bekannter Weise auf der Bauplattform ab, auf der das Werkstück hergestellt wird. Vorteilhaft ist es allerdings möglich, wegen der Verstärkung des Werkstücks durch das zusätzliche Baumaterial weniger Stützstrukturen beziehungsweise Stützstrukturen mit einem geringeren Volumen vorzusehen. Dies erspart vorteilhaft Aufwand bei der Nachbearbeitung des Bauteils, da sich die Stützstrukturen leichter entfernen lassen. Außerdem wird auch Baumaterial und Fertigungszeit eingespart, da das an den identifizierten Flächenanteilen und als Stützstruktur vorgesehene Material insgesamt ein geringeres Materialvolumen aufweist.

Gemäß einer besonderen Ausgestaltung der Erfindung ist vorgesehen, dass der Computer die lokalen Überhangwinkel in Stützpunkten Sᵢ bestimmt, die in einem die identifizierten Flächenanteile überziehenden Raster angeordnet sind. Als Raster im Sinne dieser Anmeldung soll ein gleichmäßiges Muster für die Anordnung der Stützpunkte verstanden werden. Dieses besteht aus einzelnen Rasterzellen, die durch die Stützpunkte definiert sind und sich zumindest über die identifizierten Flächenanteile erstrecken. Die Rasterzellen können beispielsweise dreieckig, quadratisch, rechteckig, rautenförmig oder sechseckig definiert sein, wobei sich die Stützpunkte jeweils an den Ecken dieser Rasterzellen befinden. Das Raster kann sich insbesondere auch über die identifizierten Flächenanteile hinweg über weitere Oberflächenbereiche des Werkstücks erstrecken. Insbesondere kann auch das gesamte Werkstück mit diesen Stützpunkten bedeckt sein. Dies erleichtert die Identifizierung der kritischen Flächenanteile, die erst festgelegt werden können, sobald die Positionierung des Werkstücks bestimmt wurde. Dabei sind die Stützpunkte nur virtuell in der Bauplandatei vorhanden.

Besonders vorteilhaft ist es, die Stützpunkte aus der Beschreibung des Geometriedatensatzes abzuleiten. Insbesondere, wenn dieses durch finite Elemente geometrisch beschrieben wird, können die Stützpunkte direkt als Knoten der finiten Elemente beschrieben werden.

Gemäß einer besonders vorteilhaften Ausgestaltung der Erfindung ist vorgesehen, dass der Computer aus der Bauplandatei und der modifizierten Bauplandatei einen Fertigungsplan für eine Nachbearbeitung des Werkstücks generiert. Die Nachbearbeitung erfolgt insbesondere durch ein klassisches subtraktives Verfahren, d.h. dass zur Erzeugung der endgültigen Bauteilgeometrie Material abgetragen wird, und zwar genau das Material, welches in der modifizierten Bauplandatei zusätzlich berücksichtigt wurde. Deswegen kann der Computer aus einem Vergleich der ursprünglichen Bauplandatei mit der modifizierten Bauplandatei auch das nominell abzutragende Material bestimmen. Da diese Daten bereits vorliegen, ist der dabei anfallende Rechenaufwand vorteilhaft vergleichsweise gering.

Die Erfindung wird auch durch Computerprogrammprodukte gelöst, die Programmbefehle zur Durchführung der oben genannten Verfahren zum Erstellen von Anweisungen für ein additives Herstellen eines Werkstücks, zum additiven Herstellen des Werkstücks selbst und zum Nachbearbeiten eines additiv hergestellten Werkstücks aufweisen. Diese Computerprogramme können insbesondere durch eine Bereitstellungsvorrichtung bereitgestellt werden. Diese kann gleichermaßen ein Datenträger oder ein Computer sein, auf dem ein Programm abläuft. Die Bereitstellungsvorrichtung kann auch ein Server sein, der das Computerprogrammprodukt zum Download anbietet.

Das Computerprogrammprodukt kann auch einen Satz von Programmbefehlen für die Anlage zum additiven Fertigen beziehungsweise für die Nachbearbeitungsanlage aufweisen. Diese Programmbefehle sind hierbei bereits auf die Herstellung eines bestimmten Werkstücks individualisiert. Das Computerprogrammprodukt zur Nachbearbeitung des Werkstücks kann dabei in das Computerprogrammprodukt zur additiven Fertigung des Werkstücks integriert sein, so dass es sich hierbei nur um eine einzige Datei handelt. Es können allerdings auch zwei Dateien generiert werden, wobei die eine an die Anlage zum additiven Fertigen und die andere an die Nachbearbeitungsanlage übermittelt wird.

Die genannte Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass dieses das erfindungsgemäße Werkstück erzeugt.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Es zeigen:
- Figur 1: schematisch eine Anlage zum additiven Herstellen eines Bauteils geschnitten, auf der ein Ausführungsbeispiel des erfindungsgemäßen Verfahrens zum Herstellen eines Werkstücks abläuft,
- Figur 2 bis 4: ausgewählte Verfahrensschritte eines Ausführungsbeispiels des erfindungsgemäßen Verfahrens zum Erstellen von Anweisungen zum additiven Herstellen eines Verfahrens und des erfindungsgemäßen Verfahrens zum Herstellen des Werkstücks anhand dreidimensionaler Darstellungen des Werkstücks gemäß Bauplandatei beziehungsweise während der Herstellung und
- Figur 5 und 6: Ausführungsbeispiele des erfindungsgemäßen Verfahrens zum Erstellen von Anweisungen zum additiven Herstellen eines Werkstücks als Ablaufdiagramme.

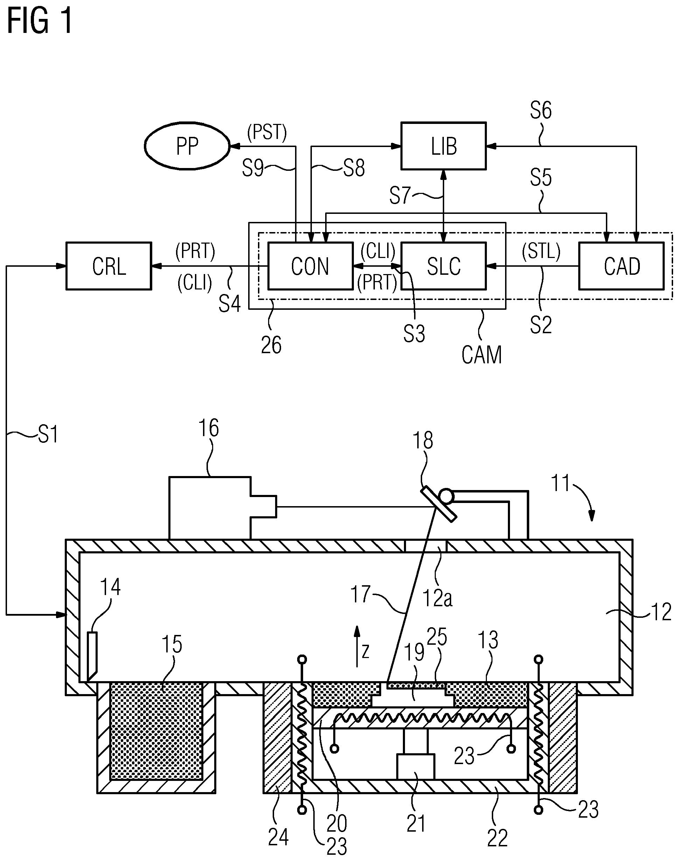

In Figur 1 ist eine Anlage 11 zum Laserschmelzen schematisch darstellt. Diese weist eine Prozesskammer 12 mit einem Fenster 12a auf, in der ein Pulverbett 13 hergestellt werden kann. Zur Herstellung jeweils einer Lage des Pulverbettes 13 wird eine Verteilungseinrichtung in Form einer Rakel 14 über einen Pulvervorrat 15 und anschließend über das Pulverbett 13 bewegt, wodurch eine dünne Schicht an Pulver im Pulverbett 13 entsteht, die eine oberste Lage 25 des Pulverbettes bildet. Ein Laser 16 erzeugt dann einen Laserstrahl 17, der mittels einer optischen Umlenkvorrichtung mit Spiegel 18 durch das Fenster 12a in die Prozesskammer 12 gelangt und über die Oberfläche des Pulverbettes 13 bewegt wird. Dabei wird das Pulver am Auftreffpunkt des Laserstrahls 17 aufgeschmolzen, wodurch ein Werkstück 19 entsteht.

Das Pulverbett 13 entsteht auf einer Bauplattform 20, welche über einen Aktor 21 in einem topfförmigen Gehäuse 22 schrittweise um jeweils eine Pulverlagendicke abgesenkt werden kann. In dem Gehäuse 22 sowie der Bauplattform 20 sind Heizeinrichtungen 23 in Form von elektrischen Widerstandsheizungen (alternativ sind auch Induktionsspulen möglich) vorgesehen, welche das in Entstehung befindliche Werkstück 19 sowie die Partikel des Pulverbettes 13 vorwärmen können. Um den Energiebedarf zur Vorwärmung zu begrenzen, befindet sich an dem Gehäuse 22 außen eine Isolation 24 mit geringer thermischer Leitfähigkeit.

Die Anlage 11 zum Laserschmelzen wird über eine erste Schnittstelle S1 durch eine Steuereinrichtung CRL kontrolliert, welche vorher mit geeigneten Prozessdaten versorgt werden muss. Hierzu dient ein Computerprogrammprodukt 26, welches aus mehreren Programmmodulen besteht. Zur Vorbereitung der Herstellung des Werkstücks 19 ist es zunächst erforderlich, in einem Konstruktionsprogrammmodul CAD die dreidimensionalen Geometriedaten des Werkstücks zu erzeugen. Der so erzeugte Geometriedatensatz STL (beispielsweise ein STL-File) wird über eine zweite Schnittstelle S2 an ein System zur Fertigungsvorbereitung CAM gegeben. Auf dem System zur Fertigungsvorbereitung CAM sind ein Erstellungsprogrammmodul CON und ein Transformationsprogrammmodul SLC installiert. Das Erstellungsprogrammmodul CON und das Transformationsprogrammmodul SLC kommunizieren über eine dritte Schnittstelle S3 miteinander. Im Transformationsprogrammmodul SLC wird der Konstruktionsdatensatz STL (empfangen über die zweite Schnittstelle S2) in einen Fertigungsdatensatz CLI (beispielsweise ein CLI-File) umgewandelt, der das Werkstück 19 in den herzustellenden Lagen beschreibt. Dieser Transformationsprozess wird auch als Slicen bezeichnet. Außerdem werden von dem Erstellungsprogrammmodul CON Verfahrensparameter PRT festgelegt, die auch die Erstellung des Fertigungsdatensatz CLI beeinflussen und mit diesem über eine vierte Schnittstelle S4 an die Steuerung CRL weitergegeben werden. Hierbei handelt es sich um Fertigungsparameter, die von der Steuerung CRL in Maschinenbefehle für die Anlage 11 umgesetzt werden können.

Gemäß Figur 1 kommunizieren auch das Konstruktionsprogrammmodul CAD und das Erstellungsprogrammmodul CON über eine Schnittstelle S5 miteinander. Dies ermöglicht es, dass das Konstruktionsprogrammmodul CAD herstellungsbedingte Daten, wie insbesondere die Positionierung des herzustellenden Werkstücks, empfangen kann. Auf diese Weise ist es möglich, erfindungsgemäß den Geometriedatensatz STL dahingehend zu modifizieren, dass in identifizierten Flächenanteilen mit kritischem Überhang zusätzliches Material vorgesehen wird. Andererseits ist es auch möglich, dass das Konstruktionsprogrammmodul CAD eine vorteilhafte Positionierung festlegt, um den Geometriedatensatz STL erfindungsgemäß zu modifizieren und diese Positionierung über die Schnittstelle S5 an das Erstellungsprogrammmodul CON überträgt.

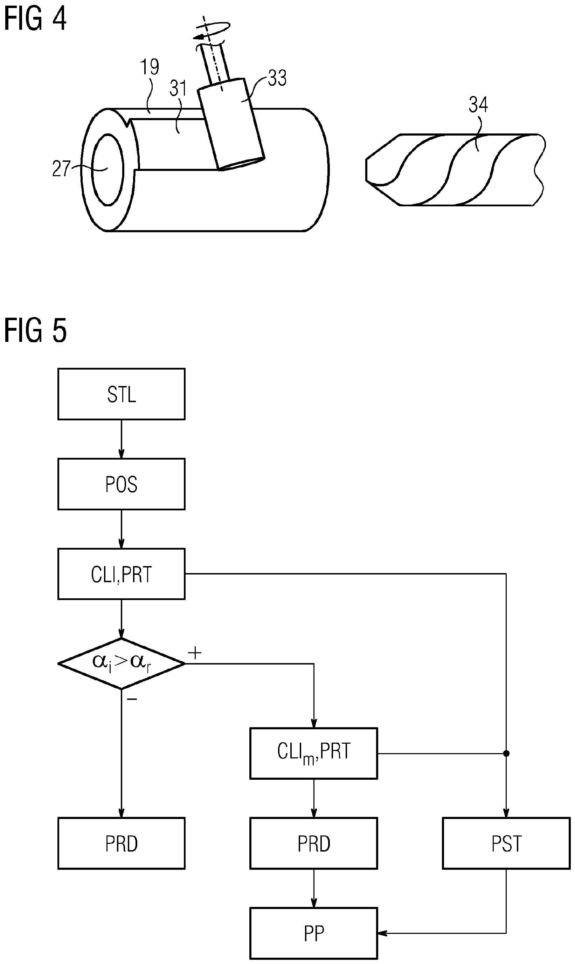

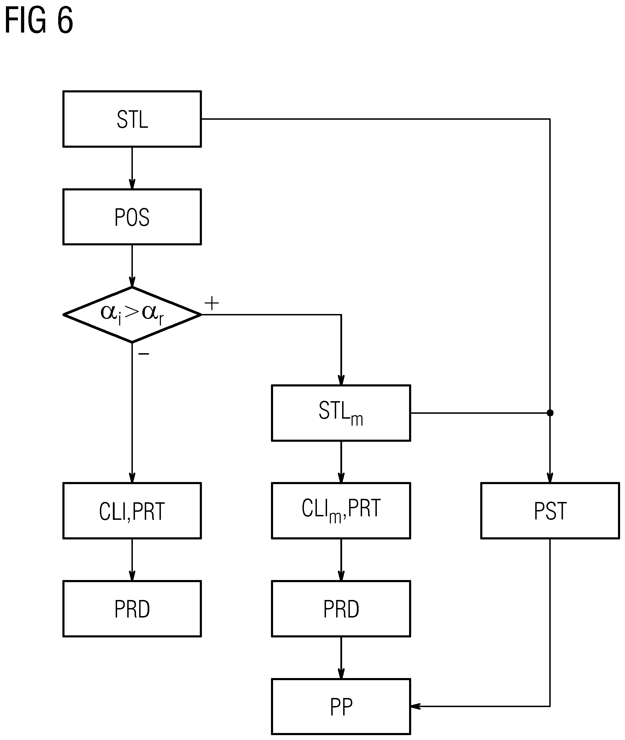

Alternativ kann die erfindungsgemäße Modifikation des Werkstücks 19 auch durch das Transformationsprogrammmodul SLC durchgeführt werden. Hierbei sind ebenfalls Fertigungsdaten des Erstellungsprogrammmoduls CON zu berücksichtigen, was über die Schnittstelle S3 gewährleistet wird. Zum Verfahrensablauf der Modifikation wird auch auf die Figuren 5 und 6 verwiesen.

Für die erfindungsgemäße Modifikation des Werkstücks 19 können Erfahrungswerte herangezogen werden, die in einer Datenbank LIB abgelegt sind. Hierbei kann es sich beispielsweise um Referenzwerte αₐ handeln, die für bestimmte Materialien und bestimmte additive Fertigungsverfahren gelten und berücksichtigt werden müssen. Gleichzeitig können Erkenntnisse, die bei der Herstellung eines bestimmten Werkstücks 19 gewonnen wurden, in die Datenbank LIB eingespeist werden. Zur Kommunikation der Datenbank LIB mit dem Konstruktionsprogrammmodul CAD ist eine Schnittstelle S6, mit dem Transformationsprogrammmodul SLC eine Schnittstelle S7 und mit dem Erstellungsprogrammmodul CON eine Schnittstelle S8 vorgesehen.

Um eine Nachbearbeitung des Werkstücks 19 in einer nicht näher dargestellten Nachbearbeitungsanlage PP zu unterstützen, kann das Computerprogrammprodukt 26 auch dazu ausgelegt sein, einen Fertigungsplan PST für die Nachbearbeitung zu erstellen. Dies kann beispielsweise, wie in Figur 1 dargestellt, durch das Erstellungsprogrammmodul CON übernommen werden, welches über eine Schnittstelle S9 mit der Nachbearbeitungsanlage PP verbunden ist. Der Verfahrensablauf für die Erstellung des Fertigungsplans PST für die Nachbearbeitung ist in den Figuren 5 und 6 näher erläutert.

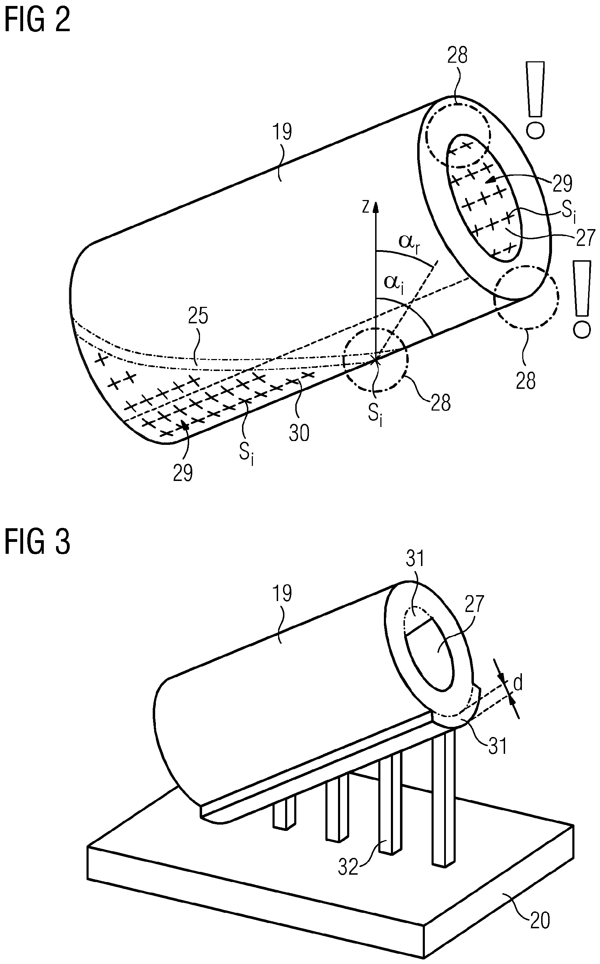

Gemäß Figur 2 ist das Bauteil 19 in Form eines Hohlzylinders mit einem Hohlraum 27 dargestellt, wobei in Figur 2 die Verkörperung des Bauteils, beschrieben durch eine Bauplandatei (CLI, PRT) dargestellt ist. Die Bauplandatei wurde bereits hinsichtlich kritischer Stellen 28 untersucht, in denen insbesondere das Winkel-Kante-Problem auftreten kann. Die strichpunktiert dargestellte kritische Stelle 28 zeigt, dass das Winkel-Kante-Problem auch außerhalb der Kanten des fertiggestellten Bauteils auftreten kann, da das Bauteil 19 ja in Lagen 25 (nur eine von diesen Lagen ist exemplarisch dargestellt) hergestellt wird und daher bei jeder Lage 25 erneut Kanten auftreten können.

Die kritischen Stellen 28 liegen in den Bereichen des Bauteils, in denen ein Überhangwinkeln αᵢ größer ist als ein festgelegter Referenzwert αᵣ. Der Überhangwinkel αᵢ wird an einem Stützpunkt Sᵢ gemessen und ergibt sich aus dem Winkel zwischen einer Aufbaurichtung z, die senkrecht zu den Lagen 25 steht, und der lokalen Ausrichtung der überhängenden Bauteilfläche am Stützpunkt Sᵢ. Bei dem in Figur 1 dargestellten Hohlzylinder wird deutlich, dass ein Überhang im Sinne der Erfindung nicht nur im unteren Bereich der äußeren Mantelfläche des Hohlzylinders entsteht, sondern auch in dem Hohlraum 27, dessen zylindrischen Innenwände ebenfalls geneigt sind, auftreten kann.

Angedeutet ist weiterhin ein Raster 29 von Stützpunkten Sᵢ, welches die äußere Mantelfläche des Hohlzylinders sowie die innere Mantelfläche des Hohlzylinders abdeckt. Auf der äußeren Mantelfläche des Bauteils 19 ist das Raster 29 der Übersichtlichkeit halber nur in einem Teilbereich dargestellt. Eine Berechnung der lokalen Überhangwinkel αᵢ an den Stützstellen Sᵢ führt dazu, dass anhand eines Vergleichs der lokalen Überhangwinkel αᵢ mit dem Referenzwert αᵣ ein Flächenanteil 30 festgestellt werden kann, in dem die Überhangwinkel αᵢ kritisch sind. Der Flächenanteil 30 ist durch eine gestrichelte Linie vom Rest der Fläche des Werkstücks 19 abgetrennt (im Hohlraum 27 nicht näher dargestellt).

Nach Identifizierung der kritischen Flächenanteile wird eine modifizierte Bauplandatei erstellt, mit deren Hilfe das in Figur 3 dargestellte Werkstück 19 auf der Bauplattform 20 hergestellt wird. Zu erkennen ist, dass die kritischen Flächenanteile 30 (vergleiche Figur 2) mit einem Auftrag von zusätzlichem Baumaterial 31 hergestellt werden. Die Kontur des ursprünglich herzustellenden Werkstücks 19 gemäß dem ursprünglichen Bauplan gemäß Figur 2 ist in Figur 3 durch eine strichpunktierte Linie angedeutet. Zu erkennen ist weiterhin, dass das zusätzliche Baumaterial 31 auf der Außenseite des Werkstücks 19 mit einer konstanten Dicke d vorgesehen wurde. Das zusätzliche Baumaterial wird im Rahmen der additiven Herstellung des Werkstücks 19 gleichzeitig mit dem restlichen Werkstück hergestellt. Dies gilt auch für Stützstrukturen 32, die zusätzlich vorgesehen werden können, um das in Herstellung befindliche Bauteil 19 besser an die Bauplattform 20 anzubinden. Diese Stützstrukturen 32 können vergleichsweise filigran ausgebildet werden, da das zusätzliche Baumaterial 31 ebenfalls einen Stabilisierungseffekt für das Werkstück 19 gewährleistet.

In Figur 4 ist dargestellt, wie das Werkstück 19 nach seiner additiven Herstellung gemäß Figur 3 und Trennung von der Bauplattform 20 einer Nachbearbeitung unterworfen wird. Die Nachbearbeitung erfolgt durch Abtragen des zusätzlichen Baumaterials 31 mittels eines subtraktiven Verfahrens. Außen auf dem Werkstück 19 wird zu diesem Zweck ein Fräskopf 33 verwendet. Der Hohlraum 27 kann mittels eines Bohrers 34 ausgebohrt werden.

Der Figur 5 kann der Ablauf des Verfahrens zum Erstellen von Anweisungen für das additive Herstellen eines Werkstücks und ein Verfahren zum additiven Herstellen des Werkstücks entnommen werden. Ausgangspunkt für das Verfahren ist eine Bauplandatei in Form des Geometriedatensatzes STL. Für das durch den Geometriedatensatz STL repräsentierte Werkstück wird im Rahmen der Fertigungsvorbereitung zum additiven Herstellen die Positionierung POS in der Prozesskammer ermittelt. Anschließend können auf Grundlage der Positionierung POS der Fertigungsdatensatz CLI und die Verfahrensparameter PRT ermittelt werden. Bei dem Fertigungsdatensatz CLI handelt es sich um eine Bauplandatei, die rechnergestützt in der bereits beschriebenen Weise an Stützpunkten Sᵢ auf Überhangwinkel αᵢ untersucht werden kann. Überall, wo αᵢ größer als ein Referenzwert αᵣ ist, wird ein Flächenanteil des durch den Fertigungsdatensatz CLI repräsentierten Werkstücks 19 festgestellt, für den ein zusätzlicher Materialauftrag auf die Oberfläche berücksichtigt werden soll. Dieses zusätzliche Material wird in einem modifizierten Fertigungsdatensatz CLIₘ festgelegt. Im Falle des Vorliegens kritischer Flächenanteile wird der modifizierte Fertigungsdatensatz für den Herstellungsvorgang PRD verwendet. Anderenfalls, d.h. wenn alle αᵢ kleiner als αᵣ sind, wird kein modifizierter Fertigungsdatensatz CLIₘ erstellt, sondern der ursprüngliche Fertigungsdatensatz CLI verwendet.

Für den Fall, dass der additive Herstellungsvorgang mit dem modifizierten Fertigungsdatensatz CLIₘ angefertigt wurde, wird das Werkstück nach Abschluss des additiven Fertigungsverfahrens einer Nachbearbeitung PP unterworfen. Zu diesem Zweck wird auf der Grundlage des ursprünglichen Fertigungsdatensatz CLI und des modifizierten Fertigungsdatensatzes CLIₘ ein Fertigungsplan PST für die Nachbearbeitung des Werkstücks 19 erstellt. Dieser Fertigungsplan enthält Steuerbefehle, um eine Anlage PP zur Nachbearbeitung zu steuern.

Der Ablaufplan gemäß Figur 6 betrifft ebenfalls ein Verfahren zum Erstellen von Anweisungen zum additiven Herstellen eines Bauteils und das Herstellen des Bauteils selbst. Das Verfahren zum Herstellen selbst erfolgt mittels des Fertigungsdatensatzes CLI beziehungsweise im Falle einer Erstellung mittels des modifizierten Fertigungsdatensatzes CLIₘ analog in der zu Figur 5 beschriebenen Weise und wird deswegen nicht gesondert erläutert.

Ein Unterschied zu dem Verfahren gemäß Figur 5 besteht darin, dass eine Untersuchung des Werkstücks 19 auf kritische Flächenanteile auf der Grundlage des Geometriedatensatzes STL erfolgt. Zu diesem Zweck wird zunächst eine Positionierung POS in einer Prozesskammer der additiven Fertigungsanlage ermittelt. Dann wird die Geometrie gemäß dem Geometriedatensatz STL in der geforderten Position in der bereits beschriebenen Weise auf Vorliegen von lokalen Überhangwinkeln αᵢ, die größer als der Referenzwert αᵣ sind, untersucht. Werden keine kritischen Überhangwinkel αᵢ gefunden, so wird aus dem Geometriedatensatz STL direkt der Fertigungsdatensatz CLI und die zugehörigen Verfahrensparameter PRT ermittelt. Ansonsten wird zunächst ein modifizierter Geometriedatensatz STLₘ erzeugt und aus diesem der modifizierte Fertigungsdatensatz CLIₘ mit zugehörigen Verfahrensparametern PRT erzeugt.

Zur Ermittlung des Fertigungsplans PST für eine Nachbearbeitung PP kann in dem Ausführungsbeispiel gemäß Figur 6 auch der Geometriedatensatz STLₘ und der ursprüngliche Fertigungsdatensatz STL verwendet werden. Der Vergleich dieser Datensätze ermöglicht die Ermittlung des abzutragenden Materials.

## Patentansprüche

1. Verfahren zum Erstellen von Anweisungen zum additiven Herstellen eines Werkstücks (19) aus einem Baumaterial, bei dem für das Werkstück (19) eine Bauplandatei (CLI, PRT) erstellt und eine Positionierung, in der das Werkstück (19) in einer Prozesskammer (12) einer Anlage (11) hergestellt werden soll, bestimmt wird,
**dadurch gekennzeichnet,**
**dass** ein Computer nach der Bestimmung der Positionierung des Werkstückes (19)
• unter Berücksichtigung einer Aufbaurichtung (z) des Werkstücks (19) anhand der Bauplandatei (CLI, PRT) Flächenanteile der Werkstückoberfläche identifiziert, in denen die Werkstückoberfläche einen Überhang bildet,
• für die Flächenanteile lokale Überhangwinkel αᵢ zwischen der Aufbaurichtung (z) und der lokalen Werkstückoberfläche bestimmt,
• die lokalen Überhangwinkel αᵢ mit einem vorgebbaren Referenzwert αᵣ vergleicht,
• die Flächenanteile identifiziert, für die αᵢ > αᵣ ist,
• aus der Bauplandatei (CLI, PRT) eine modifizierte Bauplandatei (CLIₘ, PRTₘ) des Werkstücks erstellt, in der die Geometrie des Werkstücks (19) dahingehend modifiziert ist, dass die identifizierten Flächenanteile mit einem Auftrag von zusätzlichem Baumaterial (31) versehen werden.

2. Verfahren nach Anspruch 1,
**dadurch gekennzeichnet,**
**dass** in der modifizierten Bauplandatei (CLIₘ, PRTₘ) ein Auftrag von zusätzlichem Baumaterial (31) auf die identifizierten Flächenanteile jeweils in gleichmäßiger Dicke berücksichtigt wird.

3. Verfahren nach Anspruch 1 oder 2,
**dadurch gekennzeichnet,**
**dass** der Referenzwert αᵣ in einem Bereich von mindestens 25° bis höchstens 50° festgelegt wird.

4. Verfahren nach einem der Ansprüche 1 bis 3,
**dadurch gekennzeichnet,**
**dass** der Computer die Bauplandatei (CLI, PRT) des Werkstücks (19) zusätzlich dahingehend modifiziert, dass die identifizierten, mit zusätzlichem Baumaterial (31) versehenen Flächenanteile mit mindestens einer Stützstruktur (32) versehen werden.

5. Verfahren nach einem der voranstehenden Ansprüche,
**dadurch gekennzeichnet,**
**dass** der Computer die lokalen Überhangwinkel in Stützpunkten Sᵢ bestimmt, die in einem die identifizierten Flächenanteile überziehenden Raster (29) angeordnet sind.

6. Verfahren nach einem der voranstehenden Ansprüche,
**dadurch gekennzeichnet,**
**dass** der Computer aus der Bauplandatei (CLI, PRT) und der modifizierten Bauplandatei (CLIₘ, PRTₘ) einen Fertigungsplan (PST) für eine Nachbearbeitung des Werkstücks (19) generiert.

7. Computerprogrammprodukt mit Programmbefehlen zur Durchführung des Verfahrens nach einem der Ansprüche 1 bis 5.

8. Computerprogrammprodukt mit Programmbefehlen für eine Anlage (11) zum additiven Fertigen, in der eine Steuereinrichtung (CRL) mittels der Programmbefehlen konfiguriert wird, ein Werkstück (19) nach einem der Ansprüche 1 bis 5 zu erzeugen.

9. Computerprogrammprodukt nach Anspruch 8 mit Programmbefehlen für eine Nachbearbeitungsanlage (PP), in der die Nachbearbeitungsanlage (PP) mit den Programmbefehlen konfiguriert wird, das Werkstück nach Anspruch 6 einer Nachbearbeitung zu unterziehen.

10. Bereitstellungsvorrichtung für das Computerprogrammprodukt nach Anspruch 7 bis 9, wobei die Bereitstellungsvorrichtung das Computerprogrammprodukt speichert und/oder bereitstellt.

11. Verfahren zum additiven Herstellen eines Werkstücks (19)
**dadurch gekennzeichnet,**
**dass**
• ein Computer nach dem Verfahren gemäß einer der Ansprüche 1 bis 5 aus einer Bauplandatei (CLI, PRT) eine modifizierte Bauplandatei (CLIₘ, PRTₘ) generiert,
• der Computer auf Grundlage der modifizierten Bauplandatei (CLIₘ, PRTₘ) Befehle für eine Anlage (11) zum additiven Fertigen generiert,
• in einer Prozesskammer (12) der Anlage (11) zum additiven Fertigen das Werkstück (19) durch Abarbeiten der Befehle erzeugt wird.

12. Verfahren nach Anspruch 11,
**dadurch gekennzeichnet,**
**dass**
• der Computer aus der Bauplandatei (CLI, PRT) und der modifizierten Bauplandatei (CLIₘ, PRTₘ) einen Fertigungsplan (PST) für eine Nachbearbeitung des Werkstücks (19) generiert,
• das Werkstück in einer Nachbearbeitungsanlage (PP) durch Abarbeiten des Fertigungsplanes (PST) nachbearbeitet wird.
